# EUROPÄISCHE PATENTSCHRIFT

(11) **EP 2 151 761 B1**
(45) Veröffentlichungstag und Bekanntmachung des Hinweises auf die Patenterteilung: **20.03.2013**
(21) Anmeldenummer: 09009987.0
(22) Anmeldetag: 03.08.2009
(51) Int. Cl.: G06F 12/02

(54) **Speicherverwaltung in einem portablen Datenträger**
Storage management in a portable data storage medium
Gestion de mémoire dans un support de données portable

(30) Priorität: 05.08.2008 DE 102008036479
(43) Veröffentlichungstag der Anmeldung: 10.02.2010
(73) Patentinhaber: Giesecke & Devrient GmbH, 81677 München (DE)
(72) Erfinder: Kramposthuber, Georg, 80639 München (DE)

(56) Entgegenhaltungen:
- WO-A-00/05652
- WO-A-99/64955
- US-A1- 2007 192 388

## Beschreibung

Die vorliegende Erfindung betrifft ein Verfahren zur dynamischen Speicherverwaltung eines Heap-Speicherbereichs eines portablen Datenträgers sowie einen portablen Datenträger mit einer derartigen Speicherverwaltung.

Portable Datenträger, z. B. Chipkarten, Mobilfunkkarten oder dergleichen, besitzen bauartbedingte lediglich geringe volatile Speicherressourcen, z. B. in einen volatilen RAM-Arbeitsspeicher, die von einer Speicherverwaltung des Datenträgers den jeweiligen nebenläufig ausgeführten Prozessen zugeteilt werden. Hierbei wird der während der Laufzeit von einem Prozess angeforderte Freispeicher in einem Heap-Speicherbereich des volatilen Speichers möglichst zusammenhängend bereitgestellt und der von einem Prozess nicht mehr benötigte Speicher wird freigegeben, um anschließend anderen Prozessen wieder als Freispeicher zu Verfügung zu stehen. Insofern konkurrieren die nebenläufigen Prozesse um den begrenzten Freispeicher des Heap-Speicherbereichs.

Das kontinuierliche Zuteilen und Freigeben von Freispeicher durch die Speicherverwaltung ist einerseits mit einer fortschreitenden Fragmentierung des Heap-Speicherbereichs verbunden, der jedoch mit einer Defragmentierung bzw. Kompaktierung begegnet werden kann. Andererseits müssen diejenigen Speicherobjekte im Heap-Speicherbereich gefunden und freigegeben werden, die von den betreffenden Prozessen nicht mehr benötigt werden.

Beide Aufgaben werden üblicherweise von einer automatischen Speicherbereinigung ("Garbage Collection") des Heap-Speicherbereichs übernommen, die regelmäßig oder bedarfsweise von der Speicherverwaltung des Datenträgers durchgeführt wird. Da der Umfang der Speicherbereinigung jedoch unter anderem von der Größe und dem Fragmentierungsgrad des Heap-Speicherbereichs abhängt, ist in der Regel weder der Zeitpunkt noch die Zeitdauer der Speicherbereinigung vorhersagbar. Die Speicherbereinigung kann auch die Prozessausführung unterbrechen, z.B. wenn ein Prozess Freispeicher anfordert, der erst durch eine Speicherbereinigung geschaffen werden muss. Eine derartige unvorhersehbare Unterbrechung der Prozessausführung ist insbesondere bei Prozessen mit laufzeitkritischen Prozessoperationen unerwünscht, wie z.B. bei der Kommunikation eines portablen Datenträgers mit einem Lesegerät oder dergleichen. Derartige Situationen treten jedoch bei den begrenzten Heap-Speicherbereichen portabler Datenträger vielfach auf, so dass hier häufige Speicherbereinigungen notwendig sind.

In diesem Zusammenhang offenbart die US 2001/0023478 A1 eine unterbrechbare Speicherbereinigung, die nach der Unterbrechung fortgesetzt und abgeschlossen werden kann, indem auf Statusinformationen der unterbrochenen Speicherbereinigung zurückgegriffen wird. Die WO 2005/045683 offenbart ebenfalls eine unterbrechbare Speicherbereinigung, die jedoch abschnittsweise ausgeführt werden kann, z.B. innerhalb des für die Beantwortung eines externen Kommandos zur Verfügung stehenden Antwortzeitintervalls. Dadurch werden Kommunikationsfehler aufgrund von Antwortverzögerungen vermieden. Eine derartige Unterbrechung und Fortsetzung einer automatischen Speicherbereinigung erfordert jedoch spezielle Verwaltungsstrukturen und -prozesse, die die beschränkten Ressourcen eines portablen Datenträgers zusätzlich belasten.

Weiter offenbart die DE 100 40 974 A1 eine virtuelle Vergrößerung eines volatilen Stapelspeicherbereichs eines portablen Datenträgers durch Auslagern von Stapelspeicherobjekten in einen nicht-volatilen Speicher. Das Problem der Verzögerung laufzeitkritischer Prozessoperationen durch eine Speicherbereinigung im Heap-Speicherbereich wird dadurch nicht gelöst.

Die WO 99/64955 A1 offenbart ein auf einem Heap-Speicher ablaufendes Garbage Collection Verfahren, bei dem entsprechend dem Speicherplatzbedarf der Heap-Speicher dynamisch expandiert und kontrahiert wird, d.h. in seiner Größe erhöht und verringert wird.

Die US 2007/0192388 A1 offenbart ein Verfahren zur Speicherbereinigung, bei dem eine Garbage Collection in einem Heap-Speicher erst ausgeführt wird, nachdem Echtzeit-Threads abgearbeitet sind, entsprechend dem Oberbegriff von Anspruch 1.

Es ist demnach die Aufgabe der vorliegenden Erfindung, ein Verfahren zur dynamischen Verwaltung eines Heap-Speicherbereichs vorzuschlagen, das die genannten Nachteile der automatischen Speicherbereinigung vermeidet.

Diese Aufgabe wird erfindungsgemäß durch ein Verfahren und einen portablen Datenträger mit den Merkmalen der unabhängigen Ansprüche gelöst. Die davon abhängigen Ansprüche beschreiben vorteilhafte Ausgestaltungen und Weiterbildungen der Erfindung.

Die vorliegende Erfindung basiert auf dem Grundgedanken, die automatische Speicherbereinigung auf dem Datenträger während der Laufzeit einer laufzeitkritischen Prozessoperation temporär auszusetzen bzw. derart zu deaktivieren, dass die Speicherbereinigung während der Laufzeit der betreffenden Prozessoperation nicht gestartet wird. Sofern die betreffende Prozessoperation während der Deaktivierung der Speicherbereinigung Freispeicher in einer Größe anfordert, die aus dem Heap-Speicherbereich zunächst nicht zu befriedigen ist, wird der angeforderte Freispeicher innerhalb eines derart kurzen Zeitintervalls anderweitig (d.h. nicht durch eine Speicherbereinigung) bereitgestellt, dass das Laufzeitverhalten der laufzeitkritischen Prozessoperation nicht beeinträchtigt wird. Insbesondere wird der Freispeicher der laufzeitkritischen Prozessoperation innerhalb eines kürzeren Zeitintervalls zugeteilt, als es durch die Speicherbereinigung möglich wäre.

Diese kurzfristige Bereitstellung von Freispeicher für laufzeitkritische Prozessoperationen in einem laufzeitoptimierten Modus alternativ zu der herkömmlichen automatischen Speicherbereinigung ist insbesondere so ausgestaltet, dass der angeforderte Freispeicher innerhalb eines hinreichend genau vorhersagbaren Zeitintervalls bereitgestellt wird, so dass bereits bei Absetzen einer Freispeicheranfrage durch die laufzeitkritische Prozessoperation sichergestellt ist, dass die Zuteilung so rechtzeitig erfolgen kann, dass das Laufzeitverhalten der Prozessoperation nicht beeinträchtigt wird.

Im Gegensatz zu der automatischen Speicherbereinigung, die zu weitgehend unvorhersagbaren Unterbrechungen einer Prozessoperation führen kann, da die Zeitdauer der Unterbrechung von nicht ohne weiteres beeinflussbaren Parametern abhängt, wie z.B. der Größe des zu bereinigenden Heap-Speicherbereichs, des Fragmentierungsgrads oder den nicht mehr benötigten Speicherobjekten, liegt das Zeitintervall zur Bereitstellung von Freispeicher im Rahmen des laufzeitoptimierten Modus unterhalb einer kritischen Schwelle, ab der eine Beeinträchtigung des Laufzeitverhaltens einer zeitkritischen Prozessoperation zu erwarten ist. Ein besonderer Verwaltungsaufwand für die Speicherverwaltung oder ein Betriebssystem des Datenträgers ist damit nicht verbunden.

Ein erfindungsgemäßes Verfahren in einem portablen Datenträger mit einem dynamisch verwalteten Heap-Speicherbereich in einem volatilen Speicher, bei dem eine Speicherverwaltung zum Bereitstellen von Freispeicher eine automatische Speicherbereinigung des Heap-Speicherbereichs durchführen kann, besteht insofern aus den folgenden Schritten:
- Deaktivieren der automatischen Speicherbereinigung des Heap-Speicherbereichs durch die Speicherverwaltung während der Ausführung einer laufzeitkritischen Prozessoperation durch einen Prozessor des Datenträgers und Aktivieren eines laufzeitoptimierten Modus;
- Bereitstellen von Freispeicher für die laufzeitkritische Prozessoperation ohne die laufzeitkritische Ausführung der Prozessoperation zu beeinträchtigen, sofern eine Freispeicheranforderung der Prozessoperation im Rahmen des laufzeitoptimierten Modus ergeht; und
- Deaktivieren des laufzeitoptimierten Modus und Aktivieren der automatischen Speicherbereinigung nach Beendigung der laufzeitkritischen Prozessoperation.

Entsprechend umfasst ein erfindungsgemäßer Datenträger einen Prozessor, einen volatilen Speicher mit einem darin eingerichteten Heap-Speicherbereich, ein Betriebssystem mit einer Speicherverwaltung sowie zumindest eine auf dem Prozessor als Prozess ausführbare Applikation, wobei die Speicherverwaltung eine automatische Speicherbereinigung des Heap-Speicherbereichs regelmäßig oder bedarfsweise durchführen kann, um ausreichenden Freispeicher zur Zuteilung an Prozessoperationen zu schaffen. Im Zusammenhang mit der Ausführung laufzeitkritischer Prozessoperation ist die Speicherverwaltung eingerichtet, die automatische Speicherbereinigung für die Dauer der Ausführung der laufzeitkritischer Prozessoperation zu deaktivieren und in einen laufzeitoptimierten Modus umzuschalten, und bei Empfang einer Freispeicheranforderung in dem laufzeitoptimierten Modus den angeforderten Freispeicher innerhalb eines die laufzeitkritische Ausführung der Prozessoperation nicht beeinträchtigenden Zeitintervalls bereitstellt.

Der in dem laufzeitoptimierten Modus angeforderte Freispeicher wird unter Einbeziehung eines Speicherbereichs außerhalb des Heap-Speicherbereichs bereitgestellt, z.B. unter Einbeziehung eines von dem Heap-Speicherbereich verschiedenen Speicherbereichs des volatilen Speichers oder eines Speicherbereich eines von dem volatilen Speicher verschiedenen Speichers des Datenträgers. Die Bereitstellung von Freispeicher in dem laufzeitoptimierten Modus erfolgt durch einfache Schreib-/Leseoperationen in diesem von dem Heap-Speicherbereich verschiedenen Speicherbereich. Derartige Schreib- / Leseoperationen sind weitgehend unabhängig von der Größe des betreffenden von dem Heap-Speicherbereich verschiedenen Speicherbereichs bzw. von seinem Fragmentierungsgrad und können innerhalb eines nahezu konstanten und vorhersagbaren Zeitintervalls durchgeführt werden, das im Wesentlichen von der Schreib-/Lesegeschwindigkeit des betreffenden Speicherbereichs abhängt.

Gemäß der Erfindung kann in dem laufzeitoptimierten Modus angeforderter Freispeicher von der Speicherverwaltung einerseits in einem von dem Heap-Speicherbereich verschiedenen Speicherbereich des volatilen Speichers und andererseits in einem Speicherbereich eines von dem volatilen Speicher verschiedenen Speichers des Datenträgers bereitgestellt werden. So kann der angeforderte Freispeicher beispielsweise in einem Stapelspeicherbereich des volatilen Speichers oder in einem persistenten Heap-Speicherbereich dem persistenten Speicher des Datenträgers bereitgestellt werden. Dadurch wird ein virtueller Heap-Speicherbereich eingerichtet, der den regulären (volatilen) Heap-Speicherbereich sowie den von dem Heap-Speicherbereich verschiedenen Speicherbereich in dem volatilen Speicher oder in dem von dem volatilen Speicher verschiedenen Speicher des Datenträgers umfasst.

Weiter wird der in dem laufzeitoptimierten Modus angeforderte Freispeicher in dem Heap-Speicherbereich bereitgestellt, indem ein oder mehrere in dem Heap-Speicherbereich abgelegte Speicherobjekte in einen von dem Heap-Speicherbereich verschiedenen Speicherbereich des volatilen Speichers oder eines von dem volatilen Speicher verschiedenen Speichers des Datenträgers ausgelagert werden und der dadurch in dem Heap-Speicherbereich entstehende Freispeicher zugeteilt wird. Vorzugsweise wird der angeforderte Freispeicher in dem Heap-Speicherbereich durch Auslagern eines Speicherobjekts in den Stapelspeicherbereich des volatilen Speichers oder durch Auslagern in einen persistenten Heap-Speicherbereich des persistenten Speichers des Datenträgers bereitgestellt. Faktisch wird auch bei dieser Ausführungsform ein virtueller Heap-Speicherbereich eingerichtet, der aus dem bestehenden Heap-Speicherbereich und demjenigen von dem Heap-Speicherbereich verschiedenen Speicherbereich besteht, in den das Speicherobjekt bzw. die Speicherobjekte ausgelagert wurden.

Gemäß einer besonders bevorzugten Ausführungsform wird die Freispeicherbereitstellung von der Speicherverwaltung derart durchgeführt, dass ein im laufzeitoptimierten Modus angeforderter Freispeicher erst dann durch Auslagern eines oder mehrerer Speicherobjekte aus dem Heap-Speicherbereich (gemäß der zweiten Ausführungsform) bereitgestellt wird, wenn der angeforderte Freispeicher nicht aus dem von dem Heap-Speicherbereich verschiedenen Speicherbereich des volatilen Speichers oder des von dem volatilen Speicher verschiedenen Speichers des Datenträgers zusammenhängend (gemäß der ersten Ausführungsform) zugeteilt werden kann. Die Speicherverwaltung prüft also bei einer Freispeicheranfrage einer laufzeitkritischen Prozessoperation zunächst, ob z.B. in dem Stapelspeicherbereich des volatilen Speichers oder in einem persistenten Heap-Speicherbereich des persistenten Speichers des Datenträgers ein ausreichend großer zusammenhängender Freispeicher vorliegt. Falls dies der Fall ist, wird der Freispeicher der anfordernden Prozessoperation zugeteilt. Andernfalls werden ein oder mehrere in dem Heap-Speicherbereich vorliegende Speicherobjekte derart in den Stapelspeicherbereich oder den persistenten Heap-Speicherbereich ausgelagert, dass in dem volatilen Heap-Speicherbereich ein ausreichend großer zusammenhängender Freispeicher entsteht, der der anfordernden Prozessoperation zugeteilt werden kann.

Die Auswahl des auszulagernden Speicherobjekts durch die Speicherverwaltung kann basierend auf vorgegebenen Heuristiken erfolgen. Vorzugsweise wird von der Speicherverwaltung ein einzelnes Speicherobjekt ausgewählt, dessen Größe - eventuell zusammen mit etwaigen angrenzenden Freispeicherbereichen - zumindest der Größe des angeforderten Freispeichers entspricht. Vorzugsweise wird ein Speicherobjekt ausgewählt, dessen Größe ein Vielfaches einer Speicherseitengröße bzw. Kachelgröße des von dem Heap-Speicherbereich verschiedenen Speicherbereichs umfasst, da auf diese Weise eine möglichst effiziente und schnelle Auslagerung gewährleistet wird.

Der im Falle einer Zuteilung des angefordertem Freispeichers aus dem Heap-Speicherbereich dort noch verbleibende Freispeicher wird von der Speicherverwaltung geeignet markiert oder anderweitig für eine nachfolgende Bereitstellung von Freispeicher in dem laufzeitoptimierten Modus bei einer weiteren Freispeicheranforderung durch eine laufzeitkritische Prozessoperation registriert.

Sofern die Speicherverwaltung zur Bereitstellung von in dem laufzeitoptimierten Modus angefordertem Freispeicher einen virtuellen Heap-Speicher einrichtet, der den bestehenden Heap-Speicherbereich im volatilen Speicher um Anteile eines anderen Speicherbereichs des volatilen Speichers, z.B. des Stapelspeicherbereichs, oder um einen persistenten Heap-Speicherbereich erweitert, wird in diesem erweiterten Heap-Speicher vorzugsweise eine Heap-Speicherstruktur derart eingerichtet, dass ein zu einem Prozess gehöriges ausgelagertes Speicherobjekt zur Ausführung des Prozesses durch den Prozessor ohne weiteres in derselben Weise verfügbar ist, wie ein entsprechendes im volatilen Heap-Speicherbereich vorliegendes Speicherobjekt. Es wird also eine transparente, logische Heap-Speicherstruktur in dem gesamten virtuellen Heap-Speicher eingerichtet.

Vorzugsweise erkennt die Speicherverwaltung bzw. eine mit der Speicherverwaltung im Zusammenhang stehende Steuereinrichtung des Datenträgers, wenn eine laufzeitkritische Prozessoperation gestartet wird, um dann unmittelbar die automatische Speicherbereinigung zu deaktivieren und in den laufzeitoptimierten Modus umzuschalten. Ebenso wird vorzugsweise automatisch erkannt, wenn die betreffende laufzeitkritische Prozessoperation beendet wird. Die Speicherverwaltung bzw. die entsprechende Steuereinrichtung erkennt dann automatisch das Vorliegen von vorgegebenen Laufzeitbedingungen einer laufzeitkritischen Prozessoperation, z.B. die Kommunikation über eine kontaktlose Schnittstelle, die Abarbeitung laufzeitkritischer Kommandos oder dergleichen. Ebenso ist es möglich, dass die Speicherverwaltung eine zeitkritische Prozessoperation nicht eigenständig erkennt, sondern extern veranlasst wird, die automatische Speicherbereinigung zu deaktivieren und in den laufzeitoptimierte Modus umzuschalten. Beispielsweise kann dies von anderen nebenläufig ausgeführten Applikationsprozessen oder Betriebssystemroutinen über eine geeignete Programmierschnittstelle der Speicherverwaltung veranlasst werden.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den beiliegenden Zeichnungen, die zeigen:
- Figur 1: eine bevorzugte Ausführungsform eines erfindungsgemäßen Datenträgers; und
- Figur 2: eine erfindungsgemäße Speicheranordnung in einem virtuellen Heap-Speicherbereich; und
- Figur 3: ein schematisches Ablaufdiagramm eines bevorzugten erfindungsgemäßen Verfahrens auf einem Datenträger gemäß Figur 1.

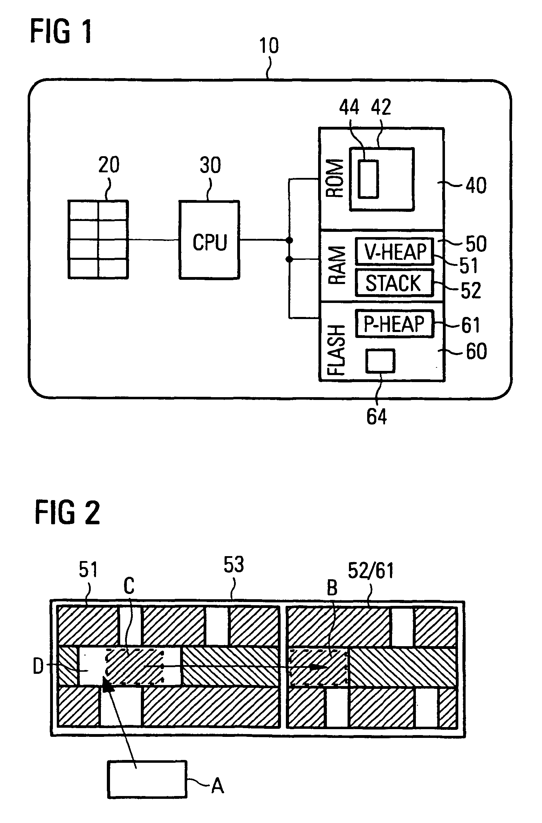

Mit Bezug auf Figur 1 umfasst ein portabler Datenträger 10, der hier als Chipkarte ausgebildet ist, eine Datenkommunikationsschnittstelle 20, einen Prozessor 30 (CPU) und verschiedene Speicher 40, 50 und 60. Der Datenträger 10 kann auch in anderer Gestalt ausgebildet sein, z. B. als USB-Token, sichere Multimediakarte, Mobilfunkkarte oder dergleichen.

Die Datenkommunikationsschnittstelle 20 ist als Kontaktfeld gemäß ISO 7816 ausgebildet und dient zur Kommunikation mit einer externen Datenverarbeitungsvorrichtung (nicht dargestellt), z. B. einem Kartenterminal, sowie zur Energieversorgung des Datenträgers 10. Alternativ kann der Datenträger 10 über eine eigene Energieversorgung (nicht dargestellt) verfügen, z. B. über eine Batterie. Auch andere kontaktbehaftete Schnittstellen können vorgesehen sein. Alternativ oder zusätzlich kann auch eine Kontaktlos-Datenkommunikationsschnittstelle (nicht dargestellt), zur kontaktlosen Datenkommunikation vorgesehen sein, z. B. eine Antenne.

In dem persistenten, nicht-wiederbeschreibbaren ROM-Speicher 40 liegt ein Multitasking- bzw. Multithreading-fähiges Betriebssystem 42, das den Datenträger 10 steuert, vorzugsweise basierend auf Java bzw. Java-Card oder repräsentiert oder ergänzt durch eine virtuelle Maschine. Das Betriebssystem 42 umfasst eine Speicherverwaltung 44 zum Verwalten der Speicherressourcen des Datenträgers 10, insbesondere zum Verwalten von zur Laufzeit von den auf dem Prozessor 30 nebenläufig ausgeführten Prozessen in dem volatilen RAM-Speicher 50 angelegten Speicherobjekten. Der RAM-Speicher 50 dient dem Datenträger 10 als volatiler Arbeitsspeicher.

Das Betriebssystem 42 oder Teile davon, wie z. B. die Speicherverwaltung 44, kann alternativ auch in dem wiederbeschreibbaren Flash-Speicher 60 vorliegen, der alternativ auch als EEPROM-Speicher oder dergleichen ausgebildet sein kann. In dem Flash-Speicher 60 ist eine Applikation 64 gespeichert, welche von dem Prozessor 30 als Applikationsprozess ausgeführt werden kann, der mehrere nebenläufig ausgeführte "Threads" (so genannte leichtgewichtige Prozesse) umfassen kann, die wiederum bestimmte Prozessoperationen abarbeiten. Allgemein dient der Flash-Speicher 60 dem Datenträger 10 zum persistenten Speichern von Daten, wie sie beispielsweise beim Ausführen von Applikationsprozessen anfallen.

Beim Erzeugen und Ausführen von Applikationsprozessen durch den Prozessor 30 teilt die Speicherverwaltung 44 den einzelnen Prozessen/Threads Speicherressourcen des volatilen RAM-Speichers 50 zu. Für Speicherobjekte, die durch einen Prozess/Thread während dessen Laufzeit dynamisch erzeugt werden, verwaltet die Speicherverwaltung 44 einen Heap-Speicherbereich 51 (V-Heap) im volatilen Speicher 50. Dieser volatile Heap-Speicherbereich 51 ist auch in Figur 2 angedeutet. Die dort schraffiert dargestellten Flächen repräsentieren die durch Speicherobjekte von ausgeführten Prozessen belegten Speicherabschnitte des volatilen Heap-Speicherbereichs 51.

In dem Stapelspeicherbereich 52 (Stack) verwaltet die Speicherverwaltung 44 Stapelspeicher ("Stacks") für die nebenläufig ausgeführten Prozesse. Die Größen der Heap- und Stapelspeicherbereiche 51, 52 sind nicht durch statische Vorgaben beschränkt, d. h. beide Speicherbereiche werden in Reaktion auf Freispeicheranforderungen der ausgeführten Prozesse von der Speicherverwaltung 44 dynamisch verwaltet. Hierbei kann es, wie in Figur 2 angedeutet, vorkommen, dass ein Prozess einen Freispeicher A in einer Größe anfragt, die in dem volatilen Heap-Speicherbereich 51 zwar nicht zusammenhängend vorliegt, jedoch als Summe mehrerer kleinerer Freispeicherbereiche vorhanden ist. Sofern der Prozess bzw. die den Freispeicher anfordernde Prozessoperation nicht laufzeitkritisch ist, kann der angeforderte Freispeicher A durch eine herkömmliche Speicherbereinigung des volatilen Heap-Speicherbereichs 51 bereitgestellt werden, indem eine Kompaktierung durch "Zusammenschieben" eine ausreichend großen zusammenhängenden Freispeicher schafft. Da hierbei der gesamte volatilen Heap-Speicherbereich 51 bereinigt bzw. kompaktiert wird, ist die Speicherbereinigung ein verhältnismäßiges zeitintensives Verfahren, das eine Bearbeitungszeit von einigen 100 ms besitzen kann.

Jedoch kann es vorkommen, dass bei der Ausführung der Applikation 64 als Applikationsprozess bestimmte Operationen dieses Prozesses bzw. seiner Threads besonders laufzeitkritisch sind und zur erfolgreichen Abarbeitung nicht durch die automatische Speicherbereinigung unterbrochen werden dürfen. Derartige laufzeitkritische Prozessoperationen betreffen insbesondere Kommunikationsvorgänge mit externen Geräten, z. B. die kontaktlose oder kontaktbehaftete Datenkommunikation über geeignete Datenkommunikationsprotokolle, oder auch Zugriffe auf statische Web-Daten.

Deshalb führt die Speicherverwaltung 44 bei einer Freispeicheranfrage einer laufzeitkritischen Prozessoperationen gerade keine automatische Speicherbereinigung durch, sondern deaktiviert diese und schaltet stattdessen in einen alternativen, laufzeitoptimierten Modus um, in dem die Freispeicheranfrage der zeitkritischen Prozessoperation schneller als durch die Speicherbereinigung des volatilen Heap-Speicherbereichs 51 und ohne Beeinträchtigung des Laufzeitverhaltens des laufzeitkritischen Prozesses befriedigt werden kann.

In dem laufzeitoptimierten Modus stehen der Speicherverwaltung zumindest zwei alternative Speicherbereitstellungsverfahren zur Verfügung, mit denen einer anfordernden Prozessoperation kurzfristig der gewünschte Freispeicher bereitgestellt werden kann. Bei einem ersten Speicherbereitstellungsverfahren wird ein angeforderter und im Heap-Speicherbereich 51 nicht vorhandener zusammenhängender Freispeicher in dem volatilen Stapelspeicherbereich 52 oder in einem persistenten Heap-Speicherbereich 61 (P-Heap) im Flash-Speicher 60 angelegt und bereitgestellt. Beispielsweise kann im Stapelspeicherbereich 52 zwischen zwei Stapelspeicherrahmen ein Freispeicher bereitgestellt werden.

Gemäß dem zweiten Speicherbereitstellungsverfahren wird der angeforderte Freispeicher im Heap-Speicherbereich 51 geschaffen, indem ein dort befindliches Speicherobjekt C in den volatilen Stapelspeicherbereich 52 oder in einen persistenten Heap-Speicherbereich 61 ausgelagert wird. Diesen Prozess illustriert Figur 2. Der angeforderte Freispeicher A liegt in dem Heap-Speicherbereich 51 nicht in zusammenhängender Weise vor. Deshalb wird ein Speicherobjekt C aus dem volatilen Heap-Speicherbereich 51 in einen ausreichend großen Freispeicherbereich B in dem Stapelspeicherbereich 52 oder in dem persistenten Heap-Speicherbereich 61 ausgelagert, so dass der dadurch in dem Heap-Speicherbereich 51 entstehende Freispeicher D ausreichend groß zur Befriedigung der Freispeicheranforderung A des laufzeitkritischen Prozesses ist.

Bei der Auslagerung eines Speicherobjekts C in einen ausreichend großen Freispeicher B des Stapelspeicherbereichs 52 oder des persistenten Heap-Speicherbereichs 61 wird ein Speicherobjekt C geeigneter Größe ausgewählt, so dass zumindest die Speicheranforderung A der laufzeitkritischen Prozessoperation erfüllt werden kann. Insbesondere werden Speicherobjekte C ausgewählt und ausgelagert, die wesentlich größer als der angeforderte Freispeicher A sind und möglicherweise ein vielfaches einer Speicherseite bzw. Speicherkachel des Auslagerungsspeicherbereichs im Stapelspeicher 52 oder im persistenten Speicher 60 umfassen, z.B. 128 Bytes bei einem persistenten EEPROM-Speicher 60. Dadurch wird im Heap-Speicherbereich 51 ein möglichst großer Freispeicher D bei gleichbleibender Programmierzeit des persistenten Speichers 60 geschaffen. Ein eventuelle überschüssiger Freispeicher D - A nach Zuteilung des Freispeichers A in dem Freispeicherbereich D wird von der Speicherverwaltung 44 markiert oder registriert und bei einer weiteren Freispeicheranforderung einer zeitkritischen Prozessoperation zugeteilt.

Bei jedem der beiden Speicherbereitstellungsverfahren entsteht ein virtueller Heap-Speicher 53, bestehend aus dem volatilen Heap-Speicherbereich 51 zuzüglich eines Anteils im Stapelspeicherbereich 52 oder des persistenten Heap-Speicherbereichs 61, der entweder zur direkten Zuteilung an eines anfragende laufzeitkritische Speicheroperation oder zur Auslagerung eines Speicherobjekts C aus dem Heap-Speicherbereich 51 genutzt wird. In dem gesamten virtuellen Heap-Speicher 53 wird einheitlich eine transparente logische Heap-Speicherstruktur eingerichtet, so dass in den Stapelspeicherbereich 52 oder in den persistenten Heap-Speicherbereich 61 ausgelagerte Speicherobjekte ohne weiteres bei Ausführung des entsprechenden Prozesses zugreifbar sind, so dass ausgelagerte Speicherobjekte weiterhin jederzeit für den Prozessor 30 verfügbar sind, wenn auch mit erhöhter Schreib-/Lesezeit.

Während eine automatische Speicherbereinigung des gesamten Heap-Speicherbereichs 51 einige hundert Millisekunden benötigen kann, liegt der Zeitbedarf für das Auslagern eines Speicherobjekts in den persistenten Heap-Speicherbereich 61 signifikant darunter. Die Programmierzeiten eines persistenten EEPROM-Speichers betragen ca. 2 bis 4 Millisekunden für das Schreiben von bis zu 128 Bytes bzw. bei einem Flash-Speicher ca. 8 Millisekunden für das Schreiben von bis zu 256 Bytes. Derartige Verzögerungszeiten beeinträchtigen jedoch in aller Regel nicht die Ausführung einer laufzeitkritischen Prozessoperation, so dass diese trotz Zuteilung neuen Freispeichers die erforderlichen Laufzeiten einhalten kann.

Die beiden beschriebenen Speicherbereitstellungsverfahren basieren auf der Schaffung von neuem Freispeicher durch Einbeziehung eines Speicherbereichs außerhalb des Heap-Speicherbereichs in einem laufzeitoptimierten Modus unter Umgehung der üblichen automatischen Speicherbereinigung. Ergänzend kann der Speicherverwaltung im Bedarfsfalle auch noch ein drittes Speicherbereitstellungsverfahren zur Verfügung stehen, bei dem anstelle der üblichen vollständigen Speicherbereinigung eine vereinfachte, teilweise Speicherbereinigung durchgeführt wird. Hierbei werden beispielsweise gemäß dem bekannten Mark-and-Sweep-Verfahren diejenigen Speicherobjekte in dem volatilen Heap-Speicherbereich 51 detektiert, die von den entsprechenden Prozessen nicht mehr benötigt werden. Der von diesen Speicherobjekten belegte Speicher kann dann als Freispeicher freigegeben werden und durch eine zusätzliche (partielle) Kompaktierung kann weiterer zusammenhängender Freispeicher geschaffen werden. Diese vereinfachte, partielle Speicherbereinigung wird so lange durchgeführt, bis der angeforderte Freispeicher zur Verfügung steht und wird dann abgebrochen.

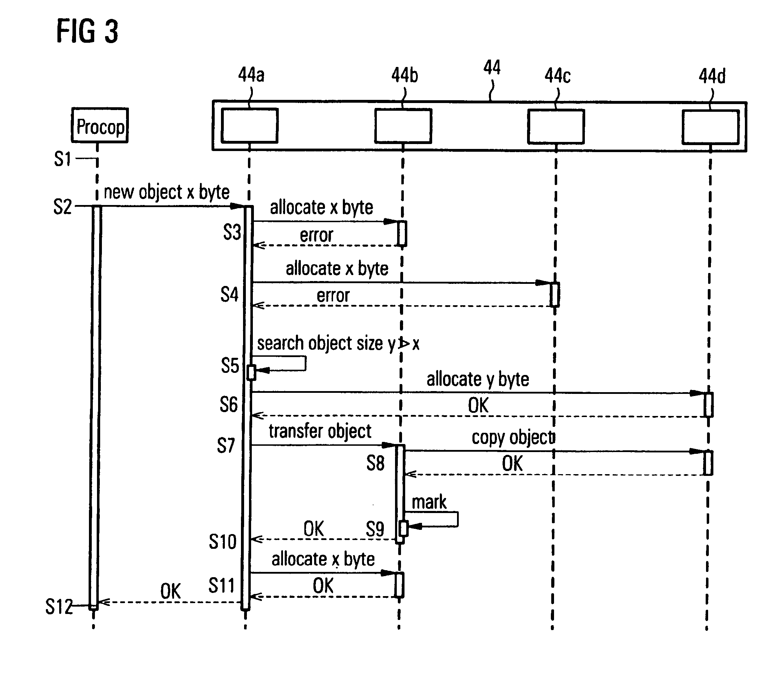

Insbesondere führt die Speicherverwaltung 44 eine Kombination des ersten und zweiten Speicherbereitstellungsverfahrens durch, indem zunächst versucht wird, einen ausreichend großen Freispeicher in dem Stapelspeicherbereich 52 oder in dem persistenten Heap-Speicherbereich 61 bereitzustellen, und, falls dieser nicht möglich ist, erst dann ein Speicherobjekt C in einen passenden Freispeicher B des Stapelspeicherbereichs 52 oder des persistenten Heap-Speicherbereichs 61 ausgelagert wird. Ein derartiges Vorgehen ist in Fig. 3 skizziert.

Die in Fig. 3 skizzierte Speicherverwaltung 44 umfasst mehrere Verwaltungsmodule, nämlich eine Objektverwaltung 44a, eine V-Heap-Verwaltung 44b, eine Stack-Verwaltung 44c und eine P-Heap-Verwaltung 44d.

In Schritt S1 erkennt die Speicherverwaltung 44, dass eine laufzeitkritische Prozessoperation (procop) gestartet wird, deaktiviert die automatische Speicherbereinigung und aktiviert den laufzeitoptimierten Modus. Die Speicherverwaltung 44 erkennt hierbei beispielsweise automatisch bestimmte Echtzeitanforderungen bzw. Merkmale einer Echtzeitverarbeitung durch eine Prozessoperation, beispielsweise Kommunikationssequenzen über eine kontaktlose Schnittstelle oder dergleichen. Alternativ kann die Speicherverwaltung 44 in Schritt S1 auch von einer Betriebssystemroutine oder einem weiteren Applikationsprozess über eine Programmierschnittstelle veranlasst werden, die herkömmliche Speicherbereinigung zu deaktivieren und den laufzeitoptimierten Modus zu aktivieren.

In Schritt S2 fordert die laufzeitkritische Prozessoperation Freispeicher für ein neues Speicherobjekt bei der Objektverwaltung 44a an (new object x byte). In Schritt S3 fordert die Objektverwaltung 44a den Freispeicher bei der V-Heap-Verwaltung 44b an (allocate x byte), die aufgrund nicht ausreichend vorliegendem Freispeicher in dem Heap-Speicherbereich 51 eine Fehlermeldung zurückgibt (error). In Schritt S4 fordert die Objektverwaltung 44a den Freispeicher bei der Stack-Verwaltung 44c an (allocate x byte), die ebenfalls erneut eine Fehlermeldung zurückliefert (error), da auch im Stapelspeicherbereich 52 kein ausreichend großer Freispeicher vorhanden ist. Eine Zuteilung eines Freispeichers aus dem Stapelspeicherbereich 52 gemäß dem oben beschriebenen ersten Speicherbereitstellungsverfahren ist demnach nicht möglich. In Schritt S5 sucht die Objektverwaltung 44a in dem volatilen Heap-Speicherbereich 51 ein geeignetes Speicherobjekt C mit ausreichender Größe (search object size y > x) und fordert in Schritt S6 Freispeicher in der Größe y des gefundenen Speicherobjekts im persistenten Heap-Speicherbereich 61 an (allocate y byte). Die P-Heap-Verwaltung 44d erkennt einen ausreichend großen Freispeicher in dem persistenten Heap-Speicherbereich 61, woraufhin in Schritt S7 das auszulagernde Speicherobjekt von der Objektverwaltung 44a an die V-Heap-Verwaltung 44b übergeben wird (transfer object), die das Speicherobjekt in den gefundenen Freispeicher im persistenten Heap-Speicherbereich 61 in Schritt S8 kopiert (copy object). In Schritt S9 wird der dadurch im volatilen Heap-Speicherbereich 51 geschaffene Freispeicher von der Heap-Verwaltung 44b als solcher markiert (mark) und in Schritt S10 an die Objektverwaltung 44a gemeldet. In Schritt S11 fordert die Objektverwaltung 44a den Freispeicher A erneut bei der V-Heap-Verwaltung 44b an (allocate x byte), die den Freispeicher nunmehr zuteilen kann, so dass die laufzeitkritische Prozessoperation in Schritt S12 fortgesetzt werden kann.

Anwendung kann die erfindungsgemäße Behandlung von Freispeicheranfragen von laufzeitkritischen Prozessoperationen durch die Speicherverwaltung 44 in dem laufzeitoptimierten Modus insbesondere bei der Beschleunigung bestimmter Prozessoperationen bei der API-Implementierung sowie bei zumeist in nativem Programmcode ausgeführtem Systemdiensten finden. Die beschriebenen Verfahren sind jedoch grundsätzlich geeignet, beliebige Applikationen bzw. deren Applikationsprozesse zu beschleunigen, wobei es auch möglich ist, den beschleunigenden, laufzeitoptimierten Modus selektiv ein und aus zu schalten, beispielsweise über eine öffentlich zugängliche Programmierschnittstelle der Speicherverwaltung 44, die von beliebigen Applikationen genutzt werden kann.

## Patentansprüche

1. Verfahren in einem portablen Datenträger (10) mit einem volatilen Speicher (50) und einer dynamischen Speicherverwaltung (44) eines Heap-Speicherbereichs (51) des volatilen Speichers (50), wobei die Speicherverwaltung (44) zum Bereitstellen von Freispeicher eine automatische Speicherbereinigung des Heap-Speicherbereichs (51) durchführen kann, wobei die Speicherverwaltung (44) während einer Ausführung einer laufzeitkritischen Prozessoperation auf dem Datenträger (10) die automatische Speicherbereinigung deaktiviert (S1) und auf Anforderung der Prozessoperation (S2) Freispeicher innerhalb eines die laufzeitkritische Ausführung der Prozessoperation nicht beeinträchtigenden Zeitintervalls bereitstellt (S3-S12), **dadurch gekennzeichnet, dass** der angeforderte Freispeicher unter Einbeziehung eines Speicherbereichs (52, 61) außerhalb des Heap-Speicherbereichs (51) bereitgestellt wird (S2-S12), und dass der angeforderte Freispeicher in dem Heap-Speicherbereich (51) durch Auslagern eines Speicherobjekts (S7-S8) in einen von dem Heap-Speicherbereich (51) verschiedenen Speicherbereich (52) des volatilen Speichers (50) oder in einen Speicherbereich (61) eines von dem volatilen Speicher (50) verschiedenen Speichers (60) des Datenträgers (10) bereitgestellt wird (S3-S12).

2. Verfahren nach Anspruch 1, **dadurch gekennzeichnet, dass** der angeforderte Freispeicher in einem Stapelspeicherbereich (52) des volatilen Speichers (50) bereitgestellt wird.

3. Verfahren nach Anspruch 2, **dadurch gekennzeichnet, dass** der angeforderte Freispeicher durch Auslagern eines Speicherobjekts in einen Speicherbereich (61) des persistenten Speichers (60) des Datenträgers (10) bereitgestellt wird (S7-S8).

4. Verfahren nach einem der Ansprüche 1 bis 3, **dadurch gekennzeichnet, dass** der angeforderte Freispeicher erst dann durch Auslagern eines Speicherobjekts bereitgestellt wird (S7-S8), wenn der in einem von dem Heap-Speicherbereich (51) verschiedenen Speicherbereich (52) des volatilen Speichers (50) oder in einem Speicherbereich (61) eines von dem volatilen Speicher (50) verschiedenen Speichers (60) des Datenträgers (10) zusammenhängend vorliegende Freispeicher kleiner als der angeforderte Freispeicher ist (S4).

5. Verfahren nach einem der Ansprüche 1 bis 4, **dadurch gekennzeichnet, dass** ein möglichst großes auszulagerndes Speicherobjekt ausgewählt wird (S5), vorzugsweise ein Speicherobjekt, dessen Größe ein Vielfaches einer Speicherseitengröße des von dem Heap-Speicherbereich (51) verschiedenen Speicherbereichs (52) des volatilen Speichers (50) oder des Speicherbereichs (61) eines von dem volatilen Speicher (50) verschiedenen Speichers (60) des Datenträgers (10) umfasst.

6. Verfahren nach einem der Ansprüche 1 bis 5, **dadurch gekennzeichnet, dass** ein nach dem Bereitstellen des angeforderten Freispeichers in dem Heap-Speicherbereich (51) verbleibender Freispeicher für ein Bereitstellen von Freispeicher bei einer weiteren Freispeicheranforderung durch eine laufzeitkritische Prozessoperation markiert wird.

7. Verfahren nach einem der Ansprüche 1 bis 6, **dadurch gekennzeichnet, dass** in dem von dem Heap-Speicherbereich (51) verschiedenen Speicherbereich (52) des volatilen Speichers (50) oder in einem Speicherbereich (61) eines von dem volatilen Speicher (50) verschiedenen Speichers (60) des Datenträgers (10) eine Heap-Speicherstruktur derart eingerichtet wird, dass ein zu einem Prozess gehöriges ausgelagertes Speicherobjekt zur weiteren Ausführung des Prozesses verfügbar ist.

8. Verfahren nach einem der Ansprüche 1 bis 7, **dadurch gekennzeichnet, dass** die Speicherverwaltung (44) eine auszuführende laufzeitkritische Prozessoperation erkennt (S1) und daraufhin die automatische Speicherbereinigung solange deaktiviert, bis die laufzeitkritische Prozessoperation abgearbeitet ist.

9. Verfahren nach einem der Ansprüche 1 bis 8, **dadurch gekennzeichnet, dass** die Speicherverwaltung (44) von einem System- oder Applikationsprozess veranlasst wird, die automatische Speicherbereinigung zu deaktivieren.

10. Portabler Datenträger (10), umfassend einen Prozessor (30), einen volatilen Speicher (50), ein Betriebssystem (42) mit einer Speicherverwaltung (44) und zumindest eine auf dem Prozessor (30) als Prozess ausführbare Applikation (64), wobei die Speicherverwaltung (44) eingerichtet ist, zur Bereitstellung von Freispeicher eine automatische Speicherbereinigung eines Heap-Speicherbereichs (51) des volatilen Speichers (50) durchzuführen, wobei die Speicherverwaltung (44) des weiteren eingerichtet ist, während einer Ausführung einer laufzeitkritischen Prozessoperation durch den Prozessor (30) die automatische Speicherbereinigung zu deaktivieren und bei Empfang einer Freispeicheranforderung der Prozessoperation innerhalb eines die laufzeitkritische Ausführung der Prozessoperation nicht beeinträchtigenden Zeitintervalls Freispeicher bereitzustellen, **dadurch gekennzeichnet, dass** die Speicherverwaltung (44) des weiteren 50 eingerichtet ist, dass der angeforderte Freispeicher unter Einbeziehung eines Speicherbereichs (52, 61) außerhalb des Heap-Speicherbereichs (51) bereitgestellt wird (S2-S12), und dass der angeforderte Freispeicher in dem Heap-Speicherbereich (51) durch Auslagern eines Speicherobjekts (S7-S8) in einen von dem Heap-Speicherbereich (51) verschiedenen Speicherbereich (52) des volatilen Speichers (50) oder in einen Speicherbereich (61) eines von dem volatilen Speicher (50) verschiedenen Speichers (60) des Datenträgers (10) bereitgestellt wird (S3-S12).

11. Datenträger (10) nach Anspruch 10, **dadurch gekennzeichnet, dass** die Speicherverwaltung (44) eingerichtet ist, ein Verfahren gemäß einem der Ansprüche 1 bis 9 durchzuführen.

12. Datenträger (10) nach Anspruch 10 oder 11, **dadurch gekennzeichnet, dass** der Datenträger (10) als Chipkarte, Java-Card, sichere Multimediakarte, Mobilfunkkarte oder USB-Speichermedium ausgebildet ist.

## Claims

1. A method in a portable data carrier (10) with a volatile memory (50) and a dynamic memory management (44) of a heap memory area (51) of the volatile memory (50), wherein the memory management (44) can carry out an automatic garbage collection of the heap memory area (51) so as to supply free memory, wherein the memory management (44) deactivates (S1) the automatic garbage collection during an execution of a runtime-critical process operation on the data carrier (10) and, upon request by the process operation (S2), supplies (S3-S12) free memory within a time interval that does not impair the runtime-critical execution of the process operation, **characterized in that** the requested free memory is supplied (S2-S12) while including a memory area (52, 61) outside the heap memory area (51), and that the requested free memory is supplied (S3-S12) in the heap memory area (51) by swapping a memory object (S7-S8) to a memory area (52) of the volatile memory (50), said memory area (52) being different from the heap memory area (51), or to a memory area (61) of a memory (60) of the data carrier (10), said memory (60) being different from the volatile memory (50).

2. The method according to claim 1, **characterized in that** the requested free memory is supplied in a stack memory area (52) of the volatile memory (50).

3. The method according to claim 2, **characterized in that** the requested free memory is supplied (S7-S8) by swapping a memory object to a memory area (61) of the persistent memory (60) of the data carrier (10).

4. The method according to any of the claims 1 to 3, **characterized in that** the requested free memory is supplied (S7-S8) by swapping a memory object only when the free memory contiguously present in a memory area (52) of the volatile memory (50), said memory area (52) being different from the heap memory area (51), or in a memory area (61) of a memory (60) of the data carrier (10), said memory (60) being different from the volatile memory (50), is smaller than the requested free memory (S4).

5. The method according to any of the claims 1 to 4, **characterized in that** a memory object to be swapped is selected (S5) that is as large as possible, preferably a memory object whose size comprises a multiple of a memory page size of the memory area (52) of the volatile memory (50), said memory area (52) being different from the heap memory area (51), or of the memory area (61) of a memory (60) of the data carrier (10), said memory (60) being different from the volatile memory (50).

6. The method according to any of the claims 1 to 5, **characterized in that** a free memory remaining after the provision of the requested free memory in the heap memory area (51) is marked for providing free memory upon a further free memory request by a runtime-critical process operation.

7. The method according to any of the claims 1 to 6, **characterized in that** in the memory area (52) of the volatile memory (50), said memory area (52) being different from the heap memory area (51), or in a memory area (61) of a memory (60) of the data carrier (10), said memory (60) being different from the volatile memory (50), a heap memory structure is set up in such a fashion that a swapped memory object belonging to a process is available for the further execution of the process.

8. The method according to any of the claims 1 to 7, **characterized in that** the memory management (44) recognizes (S1) a runtime-critical process operation to be executed and thereupon deactivates the automatic garbage collection for such a time until the runtime-critical process operation has been processed.

9. The method according to any of the claims 1 to 8, **characterized in that** the memory management (44) is caused by a system process or application process to deactivate the automatic garbage collection.

10. A portable data carrier (10) comprising a processor (30), a volatile memory (50), an operating system (42) with a memory management (44) and at least one application (64) executable as a process on the processor (30), wherein the memory management (44) is set up to execute an automatic garbage collection of a heap memory area (51) of the volatile memory (50) to supply free memory, wherein the memory management (44) is further set up to deactivate the automatic garbage collection during the execution of a runtime-critical process operation by the processor (30), and, upon receipt of a free-memory request of the process operation, to supply free memory within a time interval which does not impair the runtime-critical execution of the process operation, **characterized in that** the memory management (44) is further set up so that the requested free memory is supplied (S2-S12) while including a memory area (52, 61) outside the heap memory area (51), and that the requested free memory in the heap memory area (51) is supplied (S3-S12) by swapping a memory object (S7-S8) to a memory area (52) of the volatile memory (50), said memory area (52) being different from the heap memory area (51), or to a memory area (61) of a memory (60) of the data carrier (10), said memory (60) being different from the volatile memory (50).

11. The data carrier (10) according to claim 10, **characterized in that** the memory management (44) is set up to carry out a method according to any of the claims 1 to 9.

12. The data carrier (10) according to claim 10 or 11, **characterized in that** the data carrier (10) is configured as a chip card, Java card, secure multimedia card, mobile communication card or USB memory medium.

## Revendications

1. Procédé dans un support de données portable (10) comprenant une mémoire volatile (50) et une gestion dynamique de mémoire (44) d'un segment de mémoire heap (51) de la mémoire volatile (50), la gestion de mémoire (44) pouvant effectuer un nettoyage automatique de mémoire du segment de mémoire heap (51) pour la mise à disposition de mémoire libre, la gestion de mémoire (44) désactivant (S1) le nettoyage automatique de mémoire pendant une exécution d'une opération de processus à temps d'exécution critique sur le support de données (10) et mettant à disposition (S3-S12) sur demande de l'opération de processus (S2) de la mémoire libre dans un intervalle de temps n'entravant pas l'exécution à temps d'exécution critique de l'opération de processus, **caractérisé en ce que** la mémoire libre demandée est mise à disposition (S2-S12) en incluant un segment de mémoire (52, 61) hors du segment de mémoire heap (51), et **en ce que** la mémoire libre demandée est mise à disposition (S3- S12) dans le segment de mémoire heap (51) par transfert d'un objet mémoire (S7-S8) dans un segment de mémoire (52) de la mémoire volatile (50) différent du segment de mémoire heap (51) ou dans un segment de mémoire (61) d'une mémoire (60) du support de données (10) différente de la mémoire volatile (50).

2. Procédé selon la revendication 1, **caractérisé en ce que** la mémoire libre demandée est mise à disposition dans un segment de mémoire pile (52) de la mémoire volatile (50).

3. Procédé selon la revendication 2, **caractérisé en ce que** la mémoire libre demandée est mise à disposition (S7-S8) par transfert d'un objet mémoire dans un segment de mémoire (61) de la mémoire persistante (60) du support de données (10).

4. Procédé selon une des revendications de 1 à 3, **caractérisé en ce que** la mémoire libre demandée n'est mise à disposition (S7-S8) par transfert d'un objet mémoire que quand la mémoire libre se trouvant d'un seul tenant dans un segment de mémoire (52) de la mémoire volatile (50) différent du segment de mémoire heap (51) ou dans un segment de mémoire (61) d'une mémoire (60) du support de données (10) différente de la mémoire volatile (50) est plus petite (S4) que la mémoire libre demandée.

5. Procédé selon une des revendications de 1 à 4, **caractérisé en ce qu'**un objet mémoire à transférer aussi grand que possible est sélectionné (S5), de préférence un objet mémoire dont la grandeur correspond à un multiple d'une grandeur de page de mémoire du segment de mémoire (52) de la mémoire volatile (50) différent du segment de mémoire heap (51) ou du segment de mémoire (61) d'une mémoire (60) du support de données (10) différent de la mémoire volatile (50).

6. Procédé selon une des revendications de 1 à 5, **caractérisé en ce qu'**une mémoire libre demeurant dans le segment de mémoire heap (51) après la mise à disposition de la mémoire libre demandée est marquée pour une mise à disposition de mémoire libre lors d'une demande subséquente de mémoire libre de la part d'une opération de processus à temps d'exécution critique.

7. Procédé selon une des revendications de 1 à 6, **caractérisé en ce qu'**une structure de mémoire heap est configurée de telle sorte dans le segment de mémoire (52) de la mémoire volatile (50) différent du segment de mémoire heap (51) ou dans un segment de mémoire (61) d'une mémoire (60) du support de données (10) différente de la mémoire volatile (50) qu'un objet mémoire transféré faisant partie d'un processus est disponible pour la poursuite de l'exécution du processus.

8. Procédé selon une des revendications de 1 à 7, **caractérisé en ce que** la gestion de mémoire (44) reconnaît (S1) une opération de processus à temps d'exécution critique à exécuter et désactive à la suite de cela le nettoyage automatique de mémoire jusqu'à achèvement de l'opération de processus à temps d'exécution critique.

9. Procédé selon une des revendications de 1 à 8, **caractérisé en ce que** la gestion de mémoire (44) est amenée par un processus de système ou d'application à désactiver le nettoyage automatique de mémoire.

10. Support de données portable (10), comprenant un processeur (30), une mémoire volatile (50), un système d'exploitation (42) comportant une gestion de mémoire (44) et au moins une application (64) exécutable en tant que processus sur le processeur (30), la gestion de mémoire (44) étant configurée pour effectuer un nettoyage automatique de mémoire d'un segment de mémoire heap (51) de la mémoire volatile (50) pour la mise à disposition de mémoire libre, la gestion de mémoire (44) étant configurée en outre pour désactiver le nettoyage automatique de mémoire pendant une exécution d'une l'opération de processus à temps d'exécution critique par le processeur (30) et pour, en cas de réception d'une demande de mémoire libre de la part de l'opération de processus, mettre de la mémoire libre à disposition dans un intervalle de temps n'entravant pas l'exécution à temps d'exécution critique de l'opération de processus, **caractérisé en ce que** la gestion de mémoire (44) est configurée en outre de telle sorte que la mémoire libre demandée est mise à disposition (S2- S12) en incluant un segment de mémoire (52, 61) hors du segment de mémoire heap (51), et **en ce que** la mémoire libre demandée est mise à disposition (S3- S12) dans le segment de mémoire heap (51) par transfert d'un objet mémoire (S7-S8) dans un segment de mémoire (52) de la mémoire volatile (50) différent du segment de mémoire heap (51) ou dans un segment de mémoire (61) d'une mémoire (60) du support de données (10) différente de la mémoire volatile (50).

11. Support de données (10) selon la revendication 10, **caractérisé en ce que** la gestion de mémoire (44) est configurée pour effectuer un procédé selon une des revendications de 1 à 9.

12. Support de données (10) selon la revendication 10 ou 11, **caractérisé en ce que** le support de données (10) est réalisé sous forme de carte à puce, de carte Java, de carte multimédia sécuritaire, de carte de téléphonie mobile ou de support mémoire USB.
